# NEUE EUROPÄISCHE PATENTSCHRIFT

(11) **EP 3 031 314 B2**
(45) Veröffentlichungstag und Bekanntmachung des Hinweises auf die Entscheidung über den Einspruch: **27.11.2024**
(45) Hinweis auf die Patenterteilung: 13.10.2021
(21) Anmeldenummer: 14198431.0
(22) Anmeldetag: 17.12.2014
(51) Int. Cl.: A01D 34/90, A01D 34/82

(54) **Gartengerätebedienvorrichtung**
Garden device operating device
Dispositif de commande pour outils de jardinage

(30) Priorität: 09.12.2014 DE 102014225329; 09.12.2014 DE 102014225326
(43) Veröffentlichungstag der Anmeldung: 15.06.2016
(73) Patentinhaber: Robert Bosch GmbH, 70442 Stuttgart (DE)
(72) Erfinder: Coussins, Adrian, Suffolk, IP14 1TT (GB); Zador, Endre, Ipswich, Suffolk (County), IP38DH (GB)

(56) Entgegenhaltungen:
- EP-A1- 1 440 771
- EP-A1- 2 072 192
- EP-A1- 2 537 403
- WO-A1-2014/008627
- DE-A1- 10 332 823
- DE-A1- 102004 024 035
- DE-A1- 102009 001 513
- DE-A1- 102011 077 442
- DE-A1- 2 617 460
- DE-A1- 2 948 097
- DE-A1- 3 043 264
- DE-U1- 9 308 698
- US-A1- 2010 313 430

## Beschreibung

### Stand der Technik

Aus DE 29 48 097 A1 ist bereits eine Gartengerätebedienvorrichtung bekannt, die eine Bedieneinheit umfasst, welche ein von einem Bediener betätigbares Bedienelement und ein von einem Bediener betätigbares weiteres Bedienelement aufweist. Ferner umfasst die bereits bekannte Gartengerätebedienvorrichtung eine Elektronikeinheit, die dazu vorgesehen ist, in Abhängigkeit von einer Betätigung des Bedienelements und des weiteren Bedienelements eine Energieversorgung einer Antriebseinheit zu schalten, wobei das Bedienelement und das weitere Bedienelement als elektronische Bedienelemente, insbesondere als Sensoren, ausgebildet sind. Zudem sei auf die Druckschriften US 2010/313430 A1 und WO 2014/008627 A1 verwiesen.

### Offenbarung der Erfindung

Die Erfindung betrifft eine Gartengerätebedienvorrichtung mit den Merkmalen des Anspruchs 1. Weiterbildungen sind den abhängen Ansprüchen zu entnehmen. Vorzugsweise ist eine Betätigung des Bedienelements und/oder des weiteren Bedienelements elektronisch mittels der Elektronikeinheit abfragbar und/oder erfassbar. Es erfolgt bevorzugt mittels der Elektronikeinheit zumindest eine softwaregesteuerte Schaltung der Energieversorgung der Antriebseinheit und/oder anderer, einem Fachmann als sinnvoll erscheinenden Gartengerätefunktionen. Unter einer "Elektronikeinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Unter einer "Bedieneinheit" soll hier insbesondere eine Einheit verstanden werden, die zumindest ein Bauteil, insbesondere das Bedienelement und/oder das weitere Bedienelement, aufweist, das direkt von einem Bediener betätigbar ist, und die dazu vorgesehen ist, durch eine Betätigung und/oder durch eine Eingabe von Parametern einen Prozess und/oder einen Zustand einer mit der Bedieneinheit gekoppelten Einheit zu beeinflussen und/oder zu ändern. Unter einem "Bedienelement" soll insbesondere ein Element verstanden werden, das dazu vorgesehen ist, bei einem Bedienvorgang eine Eingabegröße von einem Bediener aufzunehmen und insbesondere unmittelbar von einem Bediener kontaktiert zu werden, wobei ein Berühren des Bedienelements erfasst und/oder eine auf das Bedienelement ausgeübte Betätigungskraft erfasst und zur Ansteuerung einer Einheit weitergeleitet wird. Unter "vorgesehen" soll insbesondere speziell ausgelegt, speziell programmiert und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Vorzugsweise umfassen/umfasst das Bedienelement und/oder das weitere Bedienelement einen infolge einer Betätigung des Bedienelements schaltbaren Schaltkontakt. Der Schaltkontakt des Bedienelements und/oder des weiteren Bedienelements ist vorzugsweise dazu vorgesehen, ein als elektrische Kenngröße ausgebildetes Schaltsignal in Abhängigkeit von einer Berührung, insbesondere eine von einer Berührung zu einer mechanischen Bewegung des Bedienelements und/oder des weiteren Bedienelements unabhängigen Berührung, des Bedienelements und/oder des weiteren Bedienelements zu erzeugen. Das Schaltsignal ist bevorzugt an die Elektronikeinheit übermittelbar und von dieser auswertbar sowie weiterverarbeitbar. Das Bedienelement und/oder das weitere Bedienelement sind/ist erfindungsgemäß als resistive/s, als kapazitive/s oder als induktive/s Bedienelement/e ausgebildet. Die Bedieneinheit kann eine Vielzahl an Bedienelementen umfassen, die als elektronische Bedienelemente ausgebildet sind und deren jeweilige Betätigung elektronisch von der Elektronikeinheit abfragbar, insbesondere elektronisch erfassbar und elektronisch weiterverarbeitbar, ist. Es ist jedoch auch denkbar, dass zumindest eines der Bedienelemente als mechanisches Bedienelement ausgebildet ist, deren jeweilige Betätigung elektronisch von der Elektronikeinheit abfragbar, insbesondere elektronisch erfassbar und elektronisch weiterverarbeitbar, ist, wie beispielsweise mittels zumindest eines Sensorelements o. dgl.

Unter einer "Betätigungsabfolge" soll hier insbesondere eine zeitlich definierte und/oder hinsichtlich einer Reihenfolge definierte Betätigung des Bedienelements und/oder des weiteren Bedienelements, wie beispielsweise eine mehrfache Betätigung des Bedienelements und/oder des weiteren Bedienelements innerhalb eines vorbestimmten Zeitraums, eine definierte Reihenfolge einer Betätigung des Bedienelements und/oder des weiteren Bedienelements, eine Betätigungssequenz einer Betätigung des Bedienelements und/oder des weiteren Bedienelements, insbesondere innerhalb eines vorbestimmten Zeitraums, eine vorgegebene Betätigungsdauer des Bedienelements und/oder des weiteren Bedienelements, insbesondere innerhalb eines vorbestimmten Zeitraums, o. dgl., verstanden werden. Betätigt ein Bediener das Bedienelement und/oder das weitere Bedienelement beispielsweise innerhalb eines vorbestimmten Zeitraums zumindest zweimal hintereinander und betätigt anschließend das weitere Bedienelement oder berührt das weitere Bedienelement während der mehrfachen Betätigung des Bedienelements, erfolgt eine Aktivierung der Energieversorgung der Antriebseinheit. Der vorbestimmte Zeitraum ist insbesondere kleiner als 20 Sekunden, bevorzugt kleiner als 10 Sekunden und besonders bevorzugt kleiner als 5 Sekunden. Weitere, einem Fachmann als sinnvoll erscheinende Betätigungen des Bedienelements und/oder des weiteren Bedienelements zumindest zu einer Schaltung einer Energieversorgung der Antriebseinheit oder zumindest zu einer Aktivierung/Deaktivierung einer Gartengerätefunktion sind ebenfalls denkbar. Besonders bevorzugt umfasst die Gartengerätebedienvorrichtung zumindest eine Ausgabeeinheit, die dazu vorgesehen ist, Informationen zumindest in Abhängigkeit von einer Betätigung des Bedienelements und/oder des weiteren Bedienelements auszugeben. Die Ausgabeeinheit kann hierbei als haptische, als akustische und/oder als optische Ausgabeeinheit ausgebildet sein. Es kann vorteilhaft einem Bediener eine Information ausgegeben werden, wie eine Bedienung zu erfolgen hat bzw. welche Schritte zu einer Aktivierung und/oder zu einer Deaktivierung zumindest einer Gartengerätefunktion erfolgen müssen.

Mittels der erfindungsgemäßen Ausgestaltung kann vorteilhaft eine Gartengerätebedienvorrichtung zur Verfügung gestellt werden, die insbesondere eine besonders hohe Sicherheit gegen eine unbeabsichtigte Inbetriebnahme einer Antriebseinheit ermöglicht. Es kann vorteilhaft eine hohe Bedienersicherheit erreicht werden. Ferner kann vorteilhaft eine Gartengerätebedienvorrichtung zur Verfügung gestellt werden, die eine intuitive Bedienung ermöglicht. Zudem können vorteilhaft Bedienelemente genutzt werden, die hinsichtlich eines Betriebsstroms gering ausgelegt sind, da Abschaltströme der Bedienelemente gering sein können und insbesondere nicht einem Strom, der durch die Antriebseinheit fließt, entsprechen müssen.

Die Elektronikeinheit ist erfindungsgemäß dazu vorgesehen, zumindest in Abhängigkeit von einer erfassten Bedienerbewegung auf dem Bedienelement und/oder auf dem weiteren Bedienelement zumindest eine Gartengerätefunktion, insbesondere eine von einer Aktivierung oder Deaktivierung der Energieversorgung der Antriebseinheit verschiedene Gartengerätefunktion, zu schalten, insbesondere zu aktivieren oder zu deaktivieren. Die von einer Aktivierung oder Deaktivierung der Energieversorgung der Antriebseinheit verschiedene Gartengerätefunktion kann beispielsweise eine Arretierschaltfunktion, eine Totmannschaltfunktion, eine Drehzahlfunktion der Antriebseinheit, eine Bearbeitungsfunktion (Schnitthöhe, Schnittbreite, Schnittgeschwindigkeit, automatischer Schneidfadenwechsel, automatische Schneidfadennachstellung, Fahrgeschwindigkeit usw.) oder eine andere, einem Fachmann als sinnvoll erscheinende Gartengerätefunktion sein. Die auf dem Bedienelement und/oder dem weiteren Bedienelement erfolgte und mittels der Elektronikeinheit erfasste Bedienerbewegung ist erfindungsgemäß als Wischbewegung, als Tippbewegung, als Relativbewegung von zumindest zwei Fingern auf dem Bedienelement und/oder auf dem weiteren Bedienelement, als Zeichnung eines Symbols mittels zumindest eines Fingers auf dem Bedienelement und/oder auf dem weiteren Bedienelement ausgebildet. Die Elektronikeinheit weist bevorzugt zumindest eine Auswerteeinheit auf, die dazu vorgesehen ist, eine Bedienerbewegung auf dem Bedienelement und/oder auf dem weiteren Bedienelement auszuwerten. Mittels der erfindungsgemäßen Ausgestaltung kann vorteilhaft eine komfortable Bedienung ermöglicht werden.

Vorteilhafterweise ist die Elektronikeinheit zumindest dazu vorgesehen, zumindest in Abhängigkeit von einem auf dem Bedienelement und/oder auf dem weiteren Bedienelement getätigten Gestensymbol zumindest eine Gartengerätefunktion, insbesondere eine von einer Aktivierung oder Deaktivierung der Energieversorgung der Antriebseinheit verschiedene Gartengerätefunktion, zu schalten, insbesondere zu aktivieren oder zu deaktivieren. Der Ausdruck "getätigtes Gestensymbol" soll hier insbesondere eine Darstellung einer Geste definieren, die mit zumindest einem Finger, mit mehreren Fingern oder mit einer Hand auf dem Bedienelement und/oder auf dem weiteren Bedienelement erzeugbar und/oder darstellbar ist und/oder die infolge eines Auflegens, zumindest eines Fingers, mehrerer Finger oder einer Hand auf das Bedienelement und/oder auf das weitere Bedienelement erzeugbar und/oder darstellbar ist. Beispielsweise ist es denkbar, dass ein Bediener infolge eines Auflegens von zwei Fingern auf das Bedienelement oder auf das weitere Bedienelement ein Gestensymbol für die Zahl "2" auf dem Bedienelement oder dem weiteren Bedienelement darstellt und die Elektronikeinheit infolgedessen beispielsweise eine Abtriebseinheit in einen zweiten Gang schaltet, eine Schnitthöhe in Stufe zwei einstellt o. dgl. Weitere, einem Fachmann als sinnvoll erscheinende Tätigungen von Gestensymbolen zu einer Schaltung zumindest einer Gartengerätefunktion sind ebenfalls denkbar. Mittels der erfindungsgemäßen Ausgestaltung kann vorteilhaft eine einfache Bedienung realisiert werden, die besonders vorteilhaft intuitiv von einem Bediener durchführbar ist.

Ferner wird vorgeschlagen, dass die Elektronikeinheit zumindest eine Auswerteeinheit aufweist, die zumindest dazu vorgesehen ist, zumindest eine Flächenkenngröße des Bedienelements und/oder des weiteren Bedienelements auszuwerten. Bevorzugt ist die Auswerteeinheit dazu vorgesehen, eine als Größe einer Kontaktfläche ausgebildete Flächenkenngröße des Bedienelements und/oder des weiteren Bedienelements auszuwerten. Vorzugsweise ist die Auswerteeinheit dazu vorgesehen, eine Größe einer von zumindest einem Finger, von mehreren Fingern oder von einer Hand eines Bedieners bedeckte Kontaktfläche des Bedienelements und/oder des weiteren Bedienelements bezogen auf eine Gesamtfläche des Bedienelements und/oder des weiteren Bedienelements auszuwerten. Es ist jedoch auch denkbar, dass die Auswerteeinheit zusätzlich oder alternativ dazu vorgesehen ist, eine als Flächenpressung ausgebildete Flächenkenngröße des Bedienelements und/oder des weiteren Bedienelements oder eine andere, einem Fachmann als sinnvoll erscheinende Flächenkenngröße auszuwerten. Beispielsweise ist es denkbar, dass die Elektronikeinheit ein Verdrehen einer Hand auf dem Bedienelement und/oder auf dem weiteren Bedienelement gemäß einer Bewegung bei einer Betätigung eines Motorradgasgriffs auswertet und infolgedessen eine Drehzahlerhöhung/-senkung der Antriebseinheit erfolgt.

Mittels der erfindungsgemäßen Ausgestaltung kann vorteilhaft beispielsweise eine Anzahl an Fingern, die von einem Bediener auf dem Bedienelement und/oder dem weiteren Bedienelement aufgelegt sind, eine Größe einer Haltekraft oder andere, einem Fachmann als sinnvoll erscheinende Flächenkenngrößen ausgewertet werden. Es kann besonders vorteilhaft ein Rückschluss auf einen sicheren Halt gezogen werden. Somit kann vorteilhaft eine hohe Bedienersicherheit erreicht werden. Ferner kann vorteilhaft infolge einer Auswertung der Flächenkenngröße des Bedienelements und/oder des weiteren Bedienelements eine Gartengerätefunktion angesteuert werden, wie beispielsweise eine Veränderung einer Drehzahl der Antriebseinheit in Abhängigkeit von einer Größe einer von einem Bediener gegriffenen oder berührten Fläche des Bedienelements und/oder des weiteren Bedienelements, oder die Auswertung ist vorteilhaft bei einer Schaltung der Energieversorgung der Antriebseinheit von der Elektronikeinheit berücksichtigbar, wobei insbesondere eine Aktivierung der Energieversorgung der Antriebseinheit unterbindbar ist, insbesondere solange eine Größe einer von einem Bediener gegriffenen oder berührten Fläche des Bedienelements und/oder des weiteren Bedienelements unter einem in der Elektronikeinheit hinterlegten Grenzwert liegt.

Zudem wird vorgeschlagen, dass die Gartengerätebedienvorrichtung zumindest eine Sensoreinheit zu einer Erfassung zumindest einer Bedienerkenngröße umfasst, die mittels der Elektronikeinheit auswertbar ist und/oder die zumindest bei einer Schaltung der Energieversorgung der Antriebseinheit von der Elektronikeinheit berücksichtigbar ist. Die Bedienerkenngröße kann beispielsweise ein mittels einer Sensoreinheit erfasstes Anliegen zumindest einer Hand oder eines Teils einer Hand eines Bedieners an dem Bedienelement und/oder an dem weiteren Bedienelement, ein Abstand einer Hand eines Bedieners von dem Bedienelement und/oder dem weiteren Bedienelement, ein Puls eines Bedieners, eine Körpertemperatur des Bedieners, eine Augenausrichtung des Bedieners oder eine andere, einem Fachmann als sinnvoll erscheinende Bedienerkenngröße sein. Mittels der erfindungsgemäßen Ausgestaltung kann vorteilhaft beispielsweise ein physischer Zustand eines Bedieners berücksichtigt werden, um insbesondere eine Schaltung der Energieversorgung der Antriebseinheit zu aktivieren oder zu deaktivieren. Zudem kann vorteilhaft bei einer Ausgestaltung der Sensoreinheit als Lichtschrankeneinheit, als Näherungssensoreinheit oder als Kontaktsensoreinheit ein korrektes Greifen eines die Gartengerätebedienvorrichtung umfassenden motorisch betreibbaren Gartengeräts oder des Bedienelements und/oder des weiteren Bedienelements erfasst werden, das zu einer Steuerung und/oder Regelung zumindest einer Gartengerätefunktion von der Elektronikeinheit verarbeitbar ist.

Besonders vorteilhafterweise ist die Sensoreinheit zumindest als Gestenerfassungseinheit ausgebildet. Bevorzugt umfasst die Sensoreinheit zumindest eine oder mehrere Kamera/s, die dazu vorgesehen ist/sind, Gesten eines Bedieners zu erfassen, insbesondere Gesten, die ein Bediener in einem Abstand zum Bedienelement und/oder zum weiteren Bedienelement ausführt. Vorzugsweise ist die Sensoreinheit in einem Bereich zwischen dem Bedienelement und dem weiteren Bedienelement angeordnet, der mittels zumindest einer Kamera der Sensoreinheit überwachbar ist. Mittels der erfindungsgemäßen Ausgestaltung kann vorteilhaft eine einfache Bedienung realisiert werden, die besonders vorteilhaft intuitiv von einem Bediener durchführbar ist.

Des Weiteren wird vorgeschlagen, dass die Gartengerätebedienvorrichtung zumindest eine Kommunikationseinheit umfasst, die zu einer Kommunikation mit einer externen Einheit vorgesehen ist. Vorzugsweise sind elektronische Daten, die zwischen der Kommunikationseinheit und der externen Einheit übertragbar sind, von der Elektronikeinheit auswertbar und insbesondere bei einer Schaltung zumindest einer Gartengerätefunktion berücksichtigbar. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit, als Zigbee-Kommunikationseinheit o. dgl. ausgebildet sein. Besonders bevorzugt ist die Kommunikationseinheit zu einer bidirektionalen Datenübertragung vorgesehen. In einer alternativen Ausgestaltung ist die Kommunikationseinheit als kabelgebundene Kommunikationseinheit ausgebildet, wie beispielsweise als LAN-Kommunikationseinheit, als USB-Kommunikationseinheit, als Powerline-Kommunikationseinheit, als CAN-Bus-Kommunikationseinheit, als Ethernet-Kommunikationseinheit, als twisted pair Kabel-Kommunikationseinheit (CAT5 oder CAT6) o. dgl. Es ist jedoch auch denkbar, dass die Kommunikationseinheit alternativ zu einer kabellosen oder zu einer kabelgebundenen Kommunikation, zu einer kabellosen und zu einer kabelgebunden Kommunikation vorgesehen ist.

Die externe Einheit kann als tragbare Datenverarbeitungseinheit, wie beispielsweise als Smartphone, als Laptop, als Tablet-PC, usw., als Firmenzentralrechner, als Router, als Handschuh mit integrierter Elektronik, als Ausweis mit integrierte Elektronik oder als eine andere, einem Fachmann als sinnvoll erscheinende externe Einheit ausgebildet sein. Bei einer Ausgestaltung als Smartphone, als Personal-Computer, als Laptop, als Netbook oder als Tablet ist vorzugsweise eine App zu einer Kommunikation mit der Kommunikationseinheit vorgesehen. Es ist jedoch auch denkbar, dass die externe Einheit als externe, transportable Bedieneinheit, als fest installierte Bedieneinheit an einem Arbeitsplatz eines Bedieners, als fest in einem Raum installierte Synchronisationseinheit eines Einsatzortes, die von einer Zentrale gesteuert werden kann, wie beispielsweise infolge von Firmenvorgaben/Sicherheitsbestimmungen, als Körperkenngrößenüberwachungseinheit oder als weitere, einem Fachmann als sinnvoll erscheinende zentrale oder dezentrale Bedieneinheit, Eingabestation und/oder zentrales oder dezentrales Terminal ausgebildet ist. Bevorzugt ist infolge einer Kommunikation zwischen der Kommunikationseinheit und der externen Einheit eine Berechtigung einer Nutzung eines Gartengeräts überprüfbar, wobei beispielsweise ein Ausbildungsstatus, ein Einlernstatus oder andere, einem Fachmann als sinnvoll erscheinende Kenngrößen überprüfbar sind, um beispielsweise eine Freischaltung der Energieversorgung der Antriebseinheit zu realisieren. Mittels der erfindungsgemäßen Ausgestaltung kann vorteilhaft sichergestellt werden, dass ein Gartengerät, das die erfindungsgemäße Gartengerätebedienvorrichtung umfasst, sicher von einem Bediener nutzbar und/oder bedienbar ist. Es kann somit eine hohe Arbeitssicherheit realisiert werden, die vorteilhafterweise zentral überwachbar und/oder protokollierbar ist.

Des Weiteren wird vorgeschlagen, dass die Elektronikeinheit zumindest eine Arretierschaltfunktion und zumindest eine Totmannschaltfunktion aufweist, die zumindest in Abhängigkeit von einer Betätigung des Bedienelements und/oder des weiteren Bedienelements auswählbar, insbesondere zumindest teilweise automatisch auswählbar, sind. Unter einer "Arretierschaltfunktion" soll hier insbesondere eine Funktion verstanden werden, bei der zumindest eine Beibehaltung der Energieversorgung der Antriebseinheit nach einer Betätigung des Bedienelements und/oder des weiteren Bedienelements zumindest im Wesentlichen unabhängig ist von einem Betätigtbleiben des Bedienelements und/oder des weiteren Bedienelements. Die Arretierschaltfunktion ist vorzugsweise dazu vorgesehen, eine Beibehaltung der Energieversorgung einer Antriebseinheit elektronisch zu steuern und/oder zu regeln. Die Arretierschaltfunktion und deren Funktionsweise sind einem Fachmann zumindest im Wesentlichen als bekannt anzusehen. Der Begriff "Totmannschaltfunktion" soll hier insbesondere eine Funktion definieren, bei der insbesondere zumindest eine Energieversorgung der Antriebseinheit infolge eines Nichtvorhandenseins einer Betätigung zumindest des Bedienelements und/oder des weiteren Bedienelements unterbindbar ist. Vorzugsweise ist die Totmannschaltfunktion dazu vorgesehen, eine Energieversorgung der Antriebseinheit zu unterbrechen, sobald das Bedienelement und/oder das weitere Bedienelement nach einer erfolgten Betätigung unbetätigt sind/ist oder ein Bediener eine Berührung des Bedienelements und/oder des weiteren Bedienelements nach einer erfolgten Betätigung aufhebt, insbesondere nach Ablauf einer definierten Zeitspanne. Die Totmannschaltfunktion und deren Funktionsweise sind einem Fachmann zumindest im Wesentlichen als bekannt anzusehen. Die Elektronikeinheit ist vorzugsweise zumindest dazu vorgesehen, die Arretierschaltfunktion oder die Totmannschaltfunktion zumindest in Abhängigkeit von einer Betätigungskenngröße, zumindest in Abhängigkeit von einer Sensorkenngröße und/oder zumindest in Abhängigkeit von einer Kommunikation mit einer externen Einheit automatisch auszuwählen. Mittels der erfindungsgemäßen Ausgestaltung kann vorteilhaft eine Gartengerätebedienvorrichtung zur Verfügung gestellt werden, die eine variable Umschaltung zwischen einer Arretierschaltfunktion und einer Totmannschaltfunktion ermöglicht. Somit kann vorteilhaft eine an unterschiedliche Bediener und/oder Einsatzgebiete anpassbare Werkzeugmaschinenbedienvorrichtung realisiert werden. Zudem kann vorteilhaft eine Gartengerätebedienvorrichtung zur Verfügung gestellt werden, die in unterschiedlichen Gartengeräten einsetzbar ist. Ferner kann vorteilhaft ein einzelnes Gartengerät, das mit einer erfindungsgemäßen Gartengerätebedienvorrichtung ausgestattet ist, von unterschiedlichen Bedienern genutzt werden, die unterschiedliche Erfahrungen bei einem Betrieb von Gartengeräten aufweisen. Somit kann vorteilhaft bei einem ungeübten Bediener eine Schaltung der Arretierschaltfunktion untersagt werden und lediglich ein Betrieb der Werkzeugmaschine in der Totmannschaltfunktion freigegeben werden.

Ferner wird vorgeschlagen, dass das Bedienelement und/oder das weitere Bedienelement berührungsempfindlich ausgebildet sind/ist. Besonders bevorzugt sind/ist das Bedienelement und/oder das weitere Bedienelement als resistive/s, als kapazitive/s oder als induktive/s Bedienelement/e ausgebildet. Mittels der erfindungsgemäßen Ausgestaltung kann vorteilhaft ein Bedienelement oder mehrere Bedienelemente genutzt werden, die hinsichtlich eines Betriebsstroms gering ausgelegt sind, da Abschaltströme der Bedienelemente gering sein können und insbesondere nicht einem Strom, der durch die Antriebseinheit fließt, entsprechen müssen. Es kann vorteilhaft eine hohe Bedienersicherheit erreicht werden.

Zudem wird ein motorisch betreibbares Gartengerät mit zumindest einer erfindungsgemäßen Gartengerätebedienvorrichtung vorgeschlagen. Das Gartengerät kann als Rasenmäher, als Rasentrimmer, als Heckenschere, als Grasschneider, als Kettensäge, als Astsäge oder als ein anderes, einem Fachmann als sinnvoll erscheinendes motorisch betreibbares Gartengerät ausgebildet sein. Mittels der erfindungsgemäßen Ausgestaltung kann besonders vorteilhaft ein komfortables und insbesondere intuitiv bedienbares Gartengerät zur Verfügung gestellt werden.

Zudem wird ein Verfahren zu einer Bedienung, insbesondere zu einer Inbetriebnahme, eines erfindungsgemäßen motorisch betreibbaren Gartengeräts vorgeschlagen. Mittels der erfindungsgemäßen Ausgestaltung kann vorteilhaft eine komfortable Bedienung eines Gartengeräts ermöglicht werden.

Des Weiteren wird vorgeschlagen, dass in zumindest einem Verfahrensschritt zumindest eine Reaktion der Elektronikeinheit auf eine Betätigung des Bedienelements in Abhängigkeit von einer berührungsempfindlichen Kenngröße des weiteren Bedienelements erfolgt. Somit ist vorteilhaft eine hohe Sicherheit gegen eine unbeabsichtigte Inbetriebnahme der Antriebseinheit erreichbar. Zudem ist eine Inbetriebnahme erst infolge eines sicheren Handhabens des Gartengeräts erreichbar.

Ferner wird vorgeschlagen, dass in zumindest einem Verfahrensschritt mittels der Elektronikeinheit zumindest eine Gartengerätefunktion, insbesondere eine von einer Aktivierung oder Deaktivierung der Energieversorgung der Antriebseinheit verschiedene Gartengerätefunktion, in Abhängigkeit von einer Betätigung eines zusätzlichen Bedienelements, das als elektronisches Bedienelement und bewegungsempfindlich ausgebildet ist, schaltbar ist. Es kann vorteilhaft eine komfortable Aktivierung oder Deaktivierung einer Gartengerätefunktion erreicht werden.

Zudem wird vorgeschlagen, dass in zumindest einem Verfahrensschritt zumindest eine Bedienerbewegung auf dem Bedienelement und/oder dem weiteren Bedienelement zumindest zu einer Schaltung, insbesondere Aktivierung oder Deaktivierung, von zumindest einer Gartengerätefunktion, insbesondere eine von einer Aktivierung oder Deaktivierung der Energieversorgung der Antriebseinheit verschiedene Gartengerätefunktion, erfasst wird. Es kann vorteilhaft eine intuitive Bedienbarkeit des Gartengeräts erreicht werden.

Die erfindungsgemäße Gartengerätebedienvorrichtung, das erfindungsgemäße Gartengerät und/oder das erfindungsgemäße Verfahren sollen/soll hierbei nicht auf die oben beschriebene Anwendung und Ausführungsform beschränkt sein. Insbesondere können/kann die erfindungsgemäße Gartengerätebedienvorrichtung, das erfindungsgemäße Gartengerät und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes motorisch betreibbares Gartengerät, insbesondere ein Rasenmäher, mit zumindest einer erfindungsgemäßen Gartengerätebedienvorrichtung in einer schematischen Darstellung,
- Fig. 2: eine Detailansicht der erfindungsgemäßen Gartengerätebedienvorrichtung in einer schematischen Darstellung,
- Fig. 3: eine Detailansicht einer alternativen erfindungsgemäßen Gartengerätebedienvorrichtung in einer schematischen Darstellung,
- Fig. 4: ein alternatives erfindungsgemäßes motorisch betreibbares Gartengerät, insbesondere eine Heckenschere oder eine Kettensäge, mit zumindest einer erfindungsgemäßen Gartengerätebedienvorrichtung in einer schematischen Darstellung und
- Fig. 5: ein weiteres alternatives erfindungsgemäßes motorisch betreibbares Gartengerät, insbesondere eine Heckenschere oder eine Kettensäge, mit zumindest einer erfindungsgemäßen Gartengerätebedienvorrichtung in einer schematischen Darstellung.

### Beschreibung der Ausführungsbeispiele

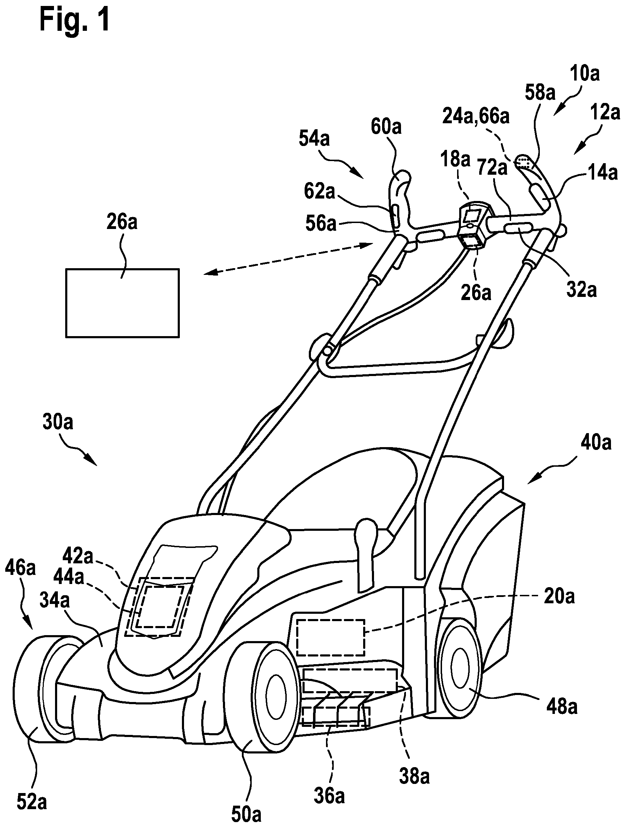

Figur 1 zeigt ein motorisch betreibbares Gartengerät 30a, das als Rasenmäher ausgebildet ist. Das Gartengerät 30a ist als elektrisch betreibbarer Rasenmäher ausgebildet, der von einem Bediener vor sich her bewegbar ist. Das Gartengerät 30a ist als sogenannter Schieberasenmäher ausgebildet. Das Gartengerät 30a umfasst zumindest eine Gartengerätebedienvorrichtung 10a zu einer Inbetriebnahme des Gartengeräts 30a und/oder zu einer Einstellung, einer Steuerung und/oder einer Regelung verschiedener Gartengerätefunktionen des Gartengeräts 30a.

Ferner umfasst das Gartengerät 30a zumindest eine Motorgehäuseeinheit 34a zu einer Aufnahme und zu einer Lagerung zumindest einer Antriebseinheit 20a, insbesondere einer Elektromotoreinheit, des Gartengeräts 30a. Zudem umfasst das Gartengerät 30a zumindest eine, einem Fachmann bereits bekannte Mähwerkeinheit 36a zu einer Bearbeitung einer Arbeitsfläche, insbesondere einer Grünfläche. Die Mähwerkeinheit 36a ist dazu vorgesehen, auf der Arbeitsfläche wachsendes Gras zu mähen. Die Mähwerkeinheit 36a ist von der Antriebseinheit 20a antreibbar. Die Mähwerkeinheit 36a kann direkt von der Antriebseinheit 20a antreibbar ausgebildet sein oder das Gartengerät 30a umfasst zumindest eine Getriebeeinheit (hier nicht näher dargestellt), die mit der Antriebseinheit 20a und der Mähwerkeinheit 36a zusammenwirkt, insbesondere antriebstechnisch mit der Antriebseinheit 20a und der Mähwerkeinheit 36a verbunden ist. Die Getriebeeinheit kann in einer separaten Getriebegehäuseeinheit (hier nicht näher dargestellt) des Gartengeräts 30a oder in der Motorgehäuseeinheit 34a angeordnet sein.

Das Gartengerät 30a umfasst ferner zumindest eine Abtragabtransporteinheit 38a, die einen Schneidraum umfasst, in dem ein, einem Fachmann bereits bekanntes Mähwerkzeug (hier nicht näher dargestellt) der Mähwerkeinheit 36a zu einem Schneiden von Gras antreibbar angeordnet ist. Die Mähwerkeinheit 36a ist somit im Schneidraum der Abtragabtransporteinheit 38a angeordnet. Der Schneidraum ist direkt angrenzend an eine Grasauswurföffnung der Abtragabtransporteinheit 38a angeordnet. Die Grasauswurföffnung mündet in eine abnehmbare Grasauffangvorrichtung 40a des Gartengeräts 30a zu einem Auffangen und/oder Sammeln von abgetragenem Grünschnitt, insbesondere von Gras.

Des Weiteren umfasst das Gartengerät 30a zumindest eine Energiespeicherverbindungseinheit 42a zu einer lösbaren Verbindung mit zumindest einer Energiespeichereinheit 44a. Die Energiespeichereinheit 44a ist als Akkumulatoreinheit ausgebildet. Die Energiespeicherverbindungseinheit 42a ist an der Motorgehäuseeinheit 34a angeordnet. Die Energiespeicherverbindungseinheit 42a weist zumindest zwei als Verbindungsführungsschienen ausgebildete Schnittstellenelemente (hier nicht näher dargestellt) auf, die eine, einem Fachmann bereits bekannte Ausgestaltung aufweisen. Zudem umfasst die Energiespeicherverbindungseinheit 42a zumindest zwei Kontaktelemente (hier nicht näher dargestellt) zu einer elektrischen Verbindung mit Gegenkontaktelementen (hier nicht näher dargestellt) der Energiespeichereinheit 44a. Die Energiespeicherverbindungseinheit 42a umfasst ferner zumindest ein Fixierungselement (hier nicht näher dargestellt), das dazu vorgesehen ist, die Energiespeichereinheit 44a zumindest in einem an der Energiespeicherverbindungseinheit 42a angeordneten Zustand mittels einer formschlüssigen und/oder kraftschlüssigen Verbindung zu befestigen.

Zu einer Bewegung des Gartengeräts 30a auf einer Arbeitsfläche, insbesondere einer Grünfläche, weist das Gartengerät 30a zumindest eine Fahrwerkseinheit 46a auf. Die Fahrwerkseinheit 46a umfasst zumindest zwei Antriebsräder 48a (in Figur 1 ist lediglich eines der zwei Antriebsräder 48a dargestellt), die mittels der Antriebseinheit 20a auf eine, einem Fachmann bereits bekannte Art und Weise antreibbar sind. Es ist jedoch auch denkbar, dass das Gartengerät 30a zusätzlich zur Antriebseinheit 20a, mittels derer die Mähwerkeinheit 36a antreibbar ist, eine zusätzliche Antriebseinheit umfasst, mittels derer die Antriebsräder 48a antreibbar sind. In einer bevorzugten Ausgestaltung des Gartengeräts 30a umfasst das Gartengerät 30a eine zusätzliche Antriebseinheit (hier nicht näher dargestellt), mittels derer die Antriebsräder 48a antreibbar sind. Zudem ist es denkbar, dass das Gartengerät 30a eine Antriebsgetriebeeinheit (hier nicht näher dargestellt) umfasst, mittels derer eine Antriebsdrehzahl und/oder ein Antriebsdrehmoment der Antriebsräder 48a einstellbar sind/ist. Zudem ist eine Antriebswirkung der Antriebsräder 48a auf eine, einem Fachmann bereits bekannte Art und Weise zu- und/oder abschaltbar. Ferner umfasst die Fahrwerkseinheit 46a zumindest ein unangetriebenes Rotationsrad 50a, insbesondere zumindest zwei unangetriebene Rotationsräder 50a, 52a. Es ist jedoch auch denkbar, dass das Rotationsrad 50a, insbesondere die Rotationsräder 50a, 52a, ebenfalls mittels der Antriebseinheit 20a antreibbar ausgebildet sind.

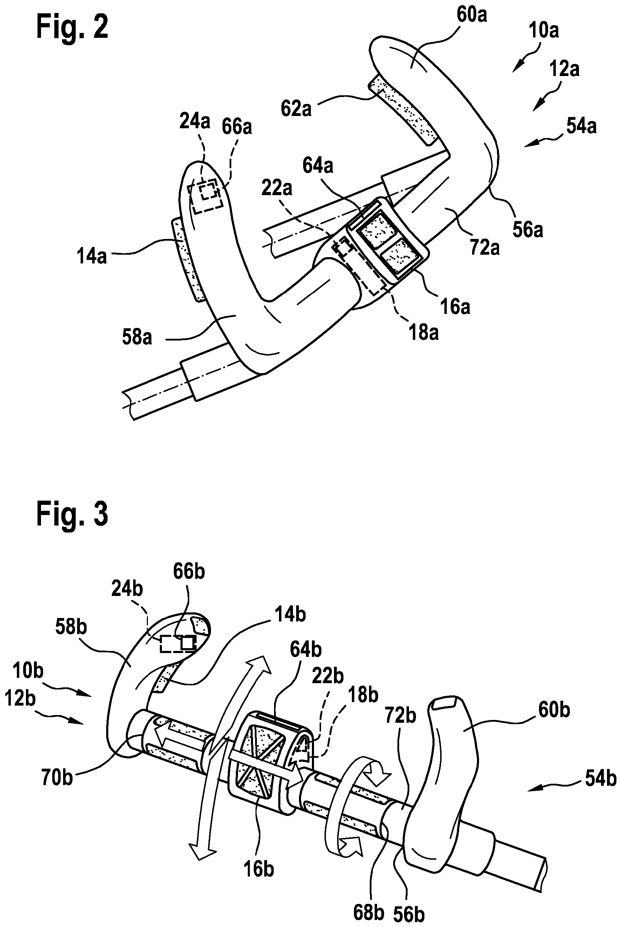

Figur 2 zeigt eine Detailansicht der Gartengerätebedienvorrichtung 10a. Die Gartengerätebedienvorrichtung 10a umfasst zumindest eine Bedieneinheit 12a, die zumindest ein von einem Bediener betätigbares Bedienelement 14a und zumindest ein von einem Bediener betätigbares weiteres Bedienelement 16a aufweist. Ferner umfasst die Gartengerätebedienvorrichtung 10a zumindest eine Elektronikeinheit 18a, die zumindest dazu vorgesehen ist, zumindest in Abhängigkeit von einer Betätigung des Bedienelements 14a und des weiteren Bedienelements 16a zumindest eine Energieversorgung der Antriebseinheit 20a zu schalten, wobei das Bedienelement 14a und/oder das weitere Bedienelement 16a als elektronische/s Bedienelement/e ausgebildet sind/ist.

Die Gartengerätebedienvorrichtung 10a umfasst eine Handgriffeinheit 54a, an der die Bedieneinheit 12a angeordnet ist. Die Handgriffeinheit 54a weist zumindest ein bügelförmiges Handgriffelement 56a auf. Das Handgriffelement 56a weist eine U-förmige Ausgestaltung auf. Es ist jedoch auch denkbar, dass das Handgriffelement 56a eine andere, einem Fachmann als sinnvoll erscheinende Ausgestaltung aufweist, wie beispielsweise ringförmig, stabförmig, T-förmig o. dgl. Das Bedienelement 14a ist an einem Hochkantschenkel 58a des Handgriffelements 56a angeordnet. Das Bedienelement 14a ist als mechanisches Bedienelement ausgebildet, das beweglich gelagert ist. Infolge einer Bewegung des Bedienelements 14a ist ein Schaltelement (hier nicht näher dargestellt), insbesondere ein Mikroschalter, der Elektronikeinheit 18a betätigbar. Das Schaltelement ist in einem Innenraum des Hochkantschenkels 58a angeordnet. Es ist jedoch auch denkbar, dass das Bedienelement 14a alternativ als elektronisches Bedienelement ausgebildet ist, das berührungsempfindlich ausgebildet ist. Zu einer Ermöglichung einer Links- oder Rechtshänder-Bedienung ist an einem weiteren Hochkantschenkel 60a des Handgriffelements 56a ein zusätzliches weiteres Bedienelement 62a der Bedieneinheit 12a angeordnet. Der Hochkantschenkel 58a und der weitere Hochkantschenkel 60a sind spiegelsymmetrisch zueinander angeordnet, insbesondere an einem Querschenkel 72a des Handgriffelements 56a. Das zusätzliche weitere Bedienelement 62a weist eine zumindest im Wesentlichen analoge Ausgestaltung zum Bedienelement 14a auf.

Das weitere Bedienelement 16a ist als elektronisches Bedienelement 16a ausgebildet. Das weitere Bedienelement 16a ist berührungsempfindlich ausgebildet. Das weitere Bedienelement 16a ist als resistives, als kapazitives oder als induktives Bedienelement ausgebildet. Vorzugsweise ist das weitere Bedienelement 16a als berührungsempfindliches Display ausgebildet. Eine Ausgestaltung des weiteren Bedienelements 16a als resistive, als kapazitive oder als induktive Bedienfläche, die mehrere Bedienbereiche aufweist, insbesondere zumindest zwei voneinander beabstandete Bedienbereiche, ist ebenfalls denkbar. Bei einer Ausgestaltung des weiteren Bedienelements 16a als resistive, als kapazitive oder als induktive Bedienfläche ist es zudem denkbar, dass auf der Bedienfläche Bediensymbole angeordnet oder dargestellt sind, wie beispielsweise ein Pfeilsymbol, ein Stoppsymbol o. dgl. Das weitere Bedienelement 16a ist an einer Zentralstelle der Handgriffeinheit 54a angeordnet. Eine Ebene, zu der der Hochkantschenkel 58a und der weitere Hochkantschenkel 60a symmetrisch ausgebildet sind, verläuft durch die Zentralstelle der Handgriffeinheit 54a. Es ist jedoch auch denkbar, dass das weitere Bedienelement 16a an einer anderen Position an der Handgriffeinheit 54a angeordnet ist, wie beispielsweise an einer Oberseite zumindest einer der Hochkantschenkel 58a, 60a, die der Motorgehäuseeinheit 34a abgewandt ist o. dgl.

Die Elektronikeinheit 18a ist zumindest dazu vorgesehen, zumindest in Abhängigkeit von einer als Betätigungsabfolge des Bedienelements 14a und/oder des weiteren Bedienelements 16a ausgebildeten Betätigungskenngröße zumindest die Energieversorgung der Antriebseinheit 20a zu schalten, insbesondere zu aktivieren oder zu deaktivieren. Die Betätigung des Bedienelements 14a und/oder des weiteren Bedienelements 16a sind/ist von der Elektronikeinheit 18a erfassbar. Es ist denkbar, dass beispielsweise zu einer Aufhebung einer Sperrfunktion der Elektronikeinheit 18a das Bedienelement 14a und/oder das weitere Bedienelement 16a für einen vorbestimmten Zeitraum, insbesondere einen vorbestimmten Zeitraum kleiner als 5 Sekunden, die von der Elektronikeinheit 18a vorgebbar ist, von einem Bediener betätigbar ist, wobei nach erfolgreicher Aufhebung der Sperrfunktion mittels einer Ausgabeeinheit 64a der Gartengerätebedienvorrichtung 10a ein Signal ausgebbar ist und ein Bediener das Bedienelement 14a und/oder das weitere Bedienelement 16a loslässt. Nach einer erfolgreichen Aufhebung der Sperrfunktion ist es beispielsweise denkbar, dass das Bedienelement 14a und/oder das weitere Bedienelement 16a zu einer Schaltung der Energieversorgung der Antriebseinheit 20a innerhalb eines vorbestimmten Zeitraums, insbesondere eines vorbestimmten Zeitraums kleiner als 5 Sekunden, die von der Elektronikeinheit 18a vorgebbar ist, das Bedienelement 14a und/oder das weitere Bedienelement 16a erneut von einem Bediener betätigbar ist. Erfolgt nach einer Aufhebung der Sperrfunktion keine erneute Betätigung des Bedienelements 14a und/oder des weiteren Bedienelements 16a innerhalb des von der Elektronikeinheit 18a vorbestimmten Zeitraums, ist die Sperrfunktion wieder automatisch mittels der Elektronikeinheit 18a aktivierbar, insbesondere um eine unbeabsichtigte Inbetriebnahme der Antriebseinheit 20a zu vermeiden. Weitere, einem Fachmann als sinnvoll erscheinende Betätigungsabfolgen des Bedienelements 14a und/oder des weiteren Bedienelements 16a zu einer Schaltung einer Gartengerätefunktion sind ebenfalls denkbar, wie beispielsweise ein pulsierendes Betätigen des Bedienelements 14a und/oder des weiteren Bedienelements 16a innerhalb eines vorbestimmten Zeitraums, eine alternierende Betätigung des Bedienelements 14a und/oder des weiteren Bedienelements 16a innerhalb eines vorbestimmten Zeitraums, eine Betätigung des Bedienelements 14a und des weiteren Bedienelements 16a in einer vorgegebenen Reihenfolge, eine Kombination aus den vorhergenannten Betätigungen des Bedienelements 14a und/oder des weiteren Bedienelements 16a o. dgl. Eine Deaktivierung der Energieversorgung der Antriebseinheit 20a kann nach einer Aktivierung der Energieversorgung der Antriebseinheit 20a infolge eines Aufhebens einer Betätigung des Bedienelements 14a und/oder des weiteren Bedienelements 16a erfolgen.

Des Weiteren ist die Elektronikeinheit 18a dazu vorgesehen, zumindest in Abhängigkeit von einer erfassten Bedienerbewegung auf dem Bedienelement 14a und/oder auf dem weiteren Bedienelement 16a zumindest eine Gartengerätefunktion, insbesondere eine von einer Aktivierung oder Deaktivierung der Energieversorgung der Antriebseinheit 20a verschiedene Gartengerätefunktion, zu schalten, insbesondere zu aktivieren oder zu deaktivieren, insbesondere bei einer Ausgestaltung des Bedienelements 14a und des weiteren Bedienelements 16a als elektronische Bedienelemente, die berührungsempfindlich ausgebildet sind. Die Elektronikeinheit 18a ist beispielsweise dazu vorgesehen, zumindest in Abhängigkeit von einer erfassten Bedienerbewegung auf dem Bedienelement 14a und/oder auf dem weiteren Bedienelement 16a eine Drehzahlfunktion der Antriebseinheit 20a, eine Bearbeitungsfunktion (Schnitthöhe, Schnittbreite, Schnittgeschwindigkeit, automatischer Schneidfadenwechsel, automatische Schneidfadennachstellung, Fahrgeschwindigkeit) o. dgl. zu schalten, insbesondere zu aktivieren oder zu deaktivieren. Es ist denkbar, dass die Gartengerätefunktion in Abhängigkeit von einer Wischbewegung, in Abhängigkeit von einer Tippbewegung, in Abhängigkeit von einer Zeichnung eines Symbols auf dem Bedienelement 14a und/oder auf dem weiteren Bedienelement 16a mittels der Elektronikeinheit 18a schaltbar ist. Beispielsweis ist es denkbar, dass infolge eines Antippens eines nach oben gerichteten Pfeilsymbols, das auf dem weiteren Bedienelement 16a anzeigbar oder als Symbol darstellbar ist, eine Drehzahlerhöhung der Antriebseinheit 20a oder eine Erhöhung einer Fahrgeschwindigkeit o. dgl. schaltbar ist. Insbesondere ist beispielsweise infolge eines Antippens eines nach unten gerichteten Pfeilsymbols, das auf dem weiteren Bedienelement 16a anzeigbar oder als Symbol darstellbar ist, eine Drehzahlreduzierung der Antriebseinheit 20a oder eine Reduzierung einer Fahrgeschwindigkeit o. dgl. schaltbar.

Ferner ist die Elektronikeinheit 18a zumindest dazu vorgesehen, zumindest in Abhängigkeit von einem auf dem Bedienelement 14a und/oder auf dem weiteren Bedienelement 16a getätigten Gestensymbol zumindest eine Gartengerätefunktion, insbesondere eine von einer Aktivierung oder Deaktivierung der Energieversorgung der Antriebseinheit 20a verschiedene Gartengerätefunktion, zu schalten. Die Elektronikeinheit 18a ist beispielsweise dazu vorgesehen, zumindest in Abhängigkeit von einem auf dem Bedienelement 14a und/oder auf dem weiteren Bedienelement 16a getätigten Gestensymbol eine Drehzahlfunktion der Antriebseinheit 20a, eine Bearbeitungsfunktion (Schnitthöhe, Schnittbreite, Schnittgeschwindigkeit, automatischer Schneidfadenwechsel, automatische Schneidfadennachstellung, Fahrgeschwindigkeit) o. dgl. zu schalten, insbesondere zu aktivieren oder zu deaktivieren.

Des Weiteren weist die Elektronikeinheit 18a zumindest eine Auswerteeinheit 22a auf, die zumindest dazu vorgesehen ist, zumindest eine Flächenkenngröße des Bedienelements 14a und/oder des weiteren Bedienelements 16a auszuwerten. Vorzugsweise ist die Auswerteeinheit 22a dazu vorgesehen, eine Größe einer von zumindest einem Finger, von mehreren Fingern oder von einer Hand eines Bedieners bedeckte Kontaktfläche des Bedienelements 14a und/oder des weiteren Bedienelements 16a bezogen auf eine Gesamtfläche des Bedienelements 14a und/oder des weiteren Bedienelements 16a auszuwerten. Es ist jedoch auch denkbar, dass die Auswerteeinheit 22a zusätzlich oder alternativ dazu vorgesehen ist, eine andere, einem Fachmann als sinnvoll erscheinende Flächenkenngröße auszuwerten. Ferner weist die Elektronikeinheit 18a zumindest eine Arretierschaltfunktion und zumindest eine Totmannschaltfunktion auf, die zumindest in Abhängigkeit von einer Betätigung des Bedienelements 14a und/oder des weiteren Bedienelements 16a auswählbar sind.

Zudem umfasst die Gartengerätebedienvorrichtung 10a zumindest eine Sensoreinheit 24a zu einer Erfassung zumindest einer Bedienerkenngröße, die mittels der Elektronikeinheit 18a auswertbar ist und/oder die zumindest bei einer Schaltung der Energieversorgung der Antriebseinheit 20a von der Elektronikeinheit 18a berücksichtigbar ist. Die Sensoreinheit 24a ist vorzugsweise zumindest als Gestenerfassungseinheit ausgebildet. Die Sensoreinheit 24a weist zumindest eine Bilderfassungseinheit 66a, insbesondere eine Kamera, auf. Die Bilderfassungseinheit 66a ist dazu vorgesehen, einen Bereich zwischen dem Hochkantschenkel 58a und dem weiteren Hochkantschenkel 60a des Handgriffelements 56a zu überwachen. Die Bilderfassungseinheit 66a ist dazu vorgesehen, Gesten eines Bedieners zu erfassen, insbesondere Gesten, die ein Bediener in einem Abstand zum Bedienelement 14a und/oder zum weiteren Bedienelement 16a ausführt. Die erfassten Gesten sind von der Elektronikeinheit 18a zu einer Schaltung einer Gartengerätefunktion auswertbar und/oder bei einer Schaltung der Energieversorgung der Antriebseinheit 20a berücksichtigbar. Wird beispielsweise mittels der Bilderfassungseinheit 66a eine flache Hand eines Bedieners erfasst, die als Stoppgeste interpretierbar ist, ist beispielsweise eine Stoppfunktion mittels der Elektronikeinheit 18a schaltbar, die dazu vorgesehen ist, die Antriebseinheit 20a und/oder die Fahrwerkseinheit 46a aktiv abzubremsen. Weitere, einem Fachmann als sinnvoll erscheinende Gesten, die mittels der Bilderfassungseinheit 66a erfassbar sind, sind ebenfalls denkbar.

Des Weiteren umfasst die Gartengerätebedienvorrichtung 10a zumindest eine Kommunikationseinheit 26a, die zu einer Kommunikation mit einer externen Einheit 28a (Figur 1) vorgesehen ist. Bevorzugt ist infolge einer Kommunikation zwischen der Kommunikationseinheit 26a und der externen Einheit 28a eine Berechtigung einer Nutzung des Gartengeräts 30a überprüfbar, wobei beispielsweise ein Ausbildungsstatus, ein Einlernstatus oder andere, einem Fachmann als sinnvoll erscheinende Kenngrößen überprüfbar sind, um beispielsweise eine Freischaltung der Energieversorgung der Antriebseinheit 20a zu realisieren. Es ist auch denkbar, dass infolge einer Kommunikation zwischen der Kommunikationseinheit 26a und der externen Einheit 28a alternativ oder zusätzlich eine Übertragung von elektronischen Daten erfolgen kann, die beispielsweise zu einer Steuerung und/oder Regelung des Gartengeräts 30a, zu einer Eingabe von Funktionsparametern, für Servicezwecke des Gartengeräts 30a, zu einer Einstellung von in der Elektronikeinheit 18a hinterlegten Grenzwerten o. dgl. nutzbar sind.

Ein Verfahren zu einer Bedienung, insbesondere zu einer Inbetriebnahme, des Gartengeräts 30a wird im Folgenden erläutert. Zu einer Inbetriebnahme des Gartengeräts 30a, insbesondere zu einer Bestromung der Antriebseinheit 20a, ist beispielsweise zu einer Aufhebung einer Sperrfunktion der Elektronikeinheit 18a das Bedienelement 14a und/oder das weitere Bedienelement 16a für einen vorbestimmten Zeitraum, insbesondere einen vorbestimmten Zeitraum kleiner als 5 Sekunden, die von der Elektronikeinheit 18a vorgebbar ist, von einem Bediener betätigbar, wobei nach erfolgreicher Aufhebung der Sperrfunktion mittels einer Ausgabeeinheit 64a der Gartengerätebedienvorrichtung 10a ein Signal ausgebbar ist und ein Bediener das Bedienelement 14a und/oder das weitere Bedienelement 16a loslässt. Nach einer erfolgreichen Aufhebung der Sperrfunktion ist es beispielsweise denkbar, dass das Bedienelement 14a und/oder das weitere Bedienelement 16a zu einer Schaltung der Energieversorgung der Antriebseinheit 20a innerhalb eines vorbestimmten Zeitraums, insbesondere eines vorbestimmten Zeitraums kleiner als 5 Sekunden, die von der Elektronikeinheit 18a vorgebbar ist, das Bedienelement 14a und/oder das weitere Bedienelement 16a erneut von einem Bediener betätigbar ist. Erfolgt nach einer Aufhebung der Sperrfunktion keine erneute Betätigung des Bedienelements 14a und/oder des weiteren Bedienelements 16a innerhalb des von der Elektronikeinheit 18a vorbestimmten Zeitraums, ist die Sperrfunktion wieder mittels der Elektronikeinheit 18a aktivierbar, insbesondere um eine unbeabsichtigte Inbetriebnahme der Antriebseinheit 20a zu vermeiden. Weitere, einem Fachmann als sinnvoll erscheinende Betätigungsabfolgen des Bedienelements 14a und/oder des weiteren Bedienelements 16a zu einer Schaltung einer Gartengerätefunktion sind ebenfalls denkbar, wie beispielsweise ein pulsierendes Betätigen des Bedienelements 14a und/oder des weiteren Bedienelements 16a innerhalb eines vorbestimmten Zeitraums, eine alternierende Betätigung des Bedienelements 14a und/oder des weiteren Bedienelements 16a innerhalb eines vorbestimmten Zeitraums, eine Betätigung des Bedienelements 14a und des weiteren Bedienelements 16a in einer vorgegebenen Reihenfolge, eine Kombination aus den vorhergenannten Betätigungen des Bedienelements 14a und/oder des weiteren Bedienelements 16a o. dgl.

In einem Ausgangszustand des Gartengeräts 30a ist automatisch die Totmannschaltfunktion ausgewählt. Es kann in zumindest einem Verfahrensschritt in Abhängigkeit von zumindest einer mittels der Sensoreinheit 24a erfassten Näherungs- und/oder Kontaktkenngröße eine zumindest teilweise automatische Auswahl der Totmannschaltfunktion erfolgen. Die Energieversorgung der Antriebseinheit 20a kann in der Totmannschaltfunktion bei einem Abheben einer Hand des Bedieners, insbesondere eines Teils der Hand des Bedieners, von dem Bedienelement 14a und/oder dem weiteren Bedienelement 16a durch die Elektronikeinheit 18a deaktiviert werden. Erfolgt mittels einer Kommunikation zwischen der Kommunikationseinheit 26a und der externen Einheit 28a eine Berechtigungsfreigabe zu einer Aktivierung der Arretierschaltfunktion, insbesondere infolge einer Übermittlung von bedienerspezifischen Kenngrößen, ist eine Auswahl der Arretierschaltfunktion möglich. Es ist denkbar, dass in zumindest einem Verfahrensschritt in Abhängigkeit von einer mittels der Kommunikationseinheit 26a der Elektronikeinheit 18a empfangenen bedienerspezifischen Kenngröße eine vollständig automatische Auswahl der Arretierschaltfunktion oder der Totmannschaltfunktion erfolgt. Alternativ oder zusätzlich kann ein Bediener zwischen Arretierschaltfunktion und Totmannschaltfunktion wählen, insbesondere nach einer Freigabe mittels einer Kommunikation zwischen der Kommunikationseinheit 26a und der externen Einheit 28a.

In zumindest einem Verfahrensschritt erfolgt vorzugsweise zumindest eine Reaktion der Elektronikeinheit 18a auf eine Betätigung des Bedienelements 14a in Abhängigkeit von einer berührungsempfindlichen Kenngröße des weiteren Bedienelements 16a. In zumindest einem Verfahrensschritt ist mittels der Elektronikeinheit 18a zumindest eine Gartengerätefunktion, insbesondere eine von einer Aktivierung oder Deaktivierung einer Energieversorgung der Antriebseinheit 20a verschiedene Gartengerätefunktion, in Abhängigkeit von einer Betätigung eines zusätzlichen Bedienelements 32a, das als elektronisches Bedienelement und bewegungsempfindlich ausgebildet ist, schaltbar. Ferner wird in zumindest einem Verfahrensschritt zumindest eine Bedienerbewegung auf dem Bedienelement 14a und/oder dem weiteren Bedienelement 16a zumindest zu einer Schaltung von zumindest einer Gartengerätefunktion, insbesondere eine von einer Aktivierung oder Deaktivierung der Energieversorgung der Antriebseinheit 20a verschiedene Gartengerätefunktion, erfasst. Hinsichtlich weiterer Verfahrensschritte des Verfahrens zu einer Bedienung des motorisch betreibbaren Gartengeräts 30a darf auf die vorhergehende Beschreibung des Gartengeräts 30a und/oder der Gartengerätebedienvorrichtung 10a verwiesen werden, da diese Beschreibung analog auch auf das Verfahren zu lesen ist und somit alle Merkmale hinsichtlich des Gartengeräts 30a und/oder der Gartengerätebedienvorrichtung 10a auch in Bezug auf das Verfahren zu einer Bedienung des motorisch betreibbaren Gartengeräts 30a als offenbart gelten.

In Figuren 3 bis 5 sind weitere Ausführungsbeispiele der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 5 ist der Buchstabe a durch die Buchstaben b bis d ersetzt.

Figur 3 zeigt eine alternative Gartengerätebedienvorrichtung 10b für ein motorisch betreibbares Gartengerät (hier nicht näher dargestellt), insbesondere für einen Rasenmäher gemäß der Beschreibung der Figuren 1 und 2. Die Gartengerätebedienvorrichtung 10b weist eine zumindest im Wesentlichen analoge Ausgestaltung zu der in den Figuren 1 und 2 dargestellten Gartengerätebedienvorrichtung 10a auf. Die Gartengerätebedienvorrichtung 10b umfasst zumindest eine Bedieneinheit 12b, die zumindest ein von einem Bediener betätigbares Bedienelement 14b und zumindest ein von einem Bediener betätigbares weiteres Bedienelement 16b aufweist, und zumindest eine Elektronikeinheit 18b, die zumindest dazu vorgesehen ist, zumindest in Abhängigkeit von einer Betätigung des Bedienelements 14b und des weiteren Bedienelements 16b zumindest eine Energieversorgung einer Antriebseinheit (hier nicht näher dargestellt) zu schalten, wobei das Bedienelement 14b und/oder das weitere Bedienelement 16b als elektronische/s Bedienelement/e ausgebildet sind/ist. Das Bedienelement 14b und das weitere Bedienelement 16b weisen eine zumindest im Wesentlichen analoge Ausgestaltung und/oder Anordnung zu den in den Figuren 1 und 2 dargestellten Bedienelement 14a und dem weiteren Bedienelement 16a auf.

Die Bedieneinheit 12b umfasst ferner zumindest ein zusätzliches Bedienelement 68b, das als elektronisches Bedienelement ausgebildet ist. Das zusätzliche Bedienelement 68b ist berührungsempfindlich ausgebildet. Das zusätzliche Bedienelement 68b ist als resistives, als kapazitives oder als induktives Bedienelement ausgebildet. Das zusätzliche Bedienelement 68b ist an einem Querschenkel 72b eines Handgriffelements 56b einer Handgriffeinheit 54b der Gartengerätebedienvorrichtung 10b angeordnet. Vorzugsweise ist das zusätzliche Bedienelement 68b als resistive, als kapazitive oder als induktive Bedienfläche ausgebildet, die mehrere Bedienbereiche aufweist, insbesondere zumindest zwei voneinander beabstandete Bedienbereiche. Eine Ausgestaltung des zusätzlichen Bedienelements 68b als berührungsempfindliches Display ist ebenfalls denkbar. Bei einer Ausgestaltung des zusätzlichen Bedienelements 68b als resistive, als kapazitive oder als induktive Bedienfläche ist es zudem denkbar, dass auf der Bedienfläche Bediensymbole angeordnet oder dargestellt sind, wie beispielsweise ein Pfeilsymbol, ein Stoppsymbol o. dgl. Das zusätzliche Bedienelement 68b erstreckt sich vorzugsweise, betrachtet entlang einer Umfangsrichtung, zum Großteil, insbesondere vollständig, um den Querschenkel 72b des Handgriffelements 56b. Es ist denkbar, dass einzelne Bedienbereiche des zusätzlichen Bedienelements 68b, betrachtet entlang der Umfangsrichtung, gleichmäßig verteilt um den Querschenkel 72b des Handgriffelements 56b angeordnet sind. Die Umfangsrichtung verläuft in einer Ebene, die sich zumindest im Wesentlichen senkrecht zu einer Längsachse des Querschenkels 72b des Handgriffelements 56b erstreckt.

Zu einer Ermöglichung einer Links- oder Rechtshänder-Bedienung umfasst die Bedieneinheit 12b ein zweites zusätzliches Bedienelement 70b. Das zweite zusätzliche Bedienelement 70b ist, betrachtet entlang der Längsachse des Querschenkels 72b, längsversetzt zum zusätzlichen Bedienelement 68b am Querschenkel 72b angeordnet. Das zweite zusätzliche Bedienelement 70b weist eine zumindest im Wesentlichen analoge Ausgestaltung zum zusätzlichen Bedienelement 68b auf. Es ist jedoch auch denkbar, dass das zusätzliche Bedienelement 68b und/oder das zweite zusätzliche Bedienelement 70b eine andere, einem Fachmann als sinnvoll erscheinende Ausgestaltung und/oder Anordnung aufweisen/aufweist.

Die Elektronikeinheit 18b ist dazu vorgesehen, zumindest in Abhängigkeit von einer erfassten Bedienerbewegung auf dem zusätzlichen Bedienelement 68b und/oder auf dem zweiten zusätzlichen Bedienelement 70b zumindest eine Gartengerätefunktion, insbesondere eine von einer Aktivierung oder Deaktivierung der Energieversorgung der Antriebseinheit verschiedene Gartengerätefunktion, zu schalten, insbesondere zu aktivieren oder zu deaktivieren. Die Elektronikeinheit 18b ist beispielsweise dazu vorgesehen, zumindest in Abhängigkeit von einer erfassten Bedienerbewegung auf dem zusätzlichen Bedienelement 68b und/oder auf dem zweiten zusätzlichen Bedienelement 70b eine Drehzahlfunktion der Antriebseinheit, eine Bearbeitungsfunktion (Schnitthöhe, Schnittbreite, Schnittgeschwindigkeit, automatischer Schneidfadenwechsel, automatische Schneidfadennachstellung, Fahrgeschwindigkeit) o. dgl. zu schalten, insbesondere zu aktivieren oder zu deaktivieren. Es ist denkbar, dass die Gartengerätefunktion in Abhängigkeit von einer Wischbewegung, in Abhängigkeit von einer Tippbewegung, in Abhängigkeit von einer Zeichnung eines Symbols o. dgl. dem zusätzlichen Bedienelement 68b und/oder auf dem zweiten zusätzlichen Bedienelement 70b mittels der Elektronikeinheit 18b schaltbar ist. Beispielsweise ist es denkbar, dass die Elektronikeinheit 18b ein Verdrehen einer Hand auf dem zusätzlichen Bedienelement 68b und/oder auf dem zweiten zusätzlichen Bedienelement 70b gemäß einer Bewegung bei einer Betätigung eines Motorradgasgriffs auswertet und infolgedessen eine Drehzahlerhöhung/-senkung der Antriebseinheit erfolgt.

Ferner weist die Elektronikeinheit 18b zumindest eine Auswerteeinheit 22b auf, die zumindest dazu vorgesehen ist, zumindest eine Flächenkenngröße des Bedienelements 14b und/oder des weiteren Bedienelements 16b auszuwerten. Weitere, einem Fachmann als sinnvoll erscheinende Steuer- und/oder Regelfunktionen der Elektronikeinheit 18b in Abhängigkeit von einer Betätigung des Bedienelements 14b, des weiteren Bedienelements 16b, des zusätzlichen Bedienelements 68b und/oder des zweiten zusätzlichen Bedienelements 70b sind ebenfalls denkbar. Hinsichtlich weiterer Merkmale und Funktionen der in der Figur 3 dargestellten Gartengerätebedienvorrichtung 10b darf auf die Beschreibung der in den Figuren 1 und 2 dargestellten Gartengerätebedienvorrichtung 10a verwiesen werden.

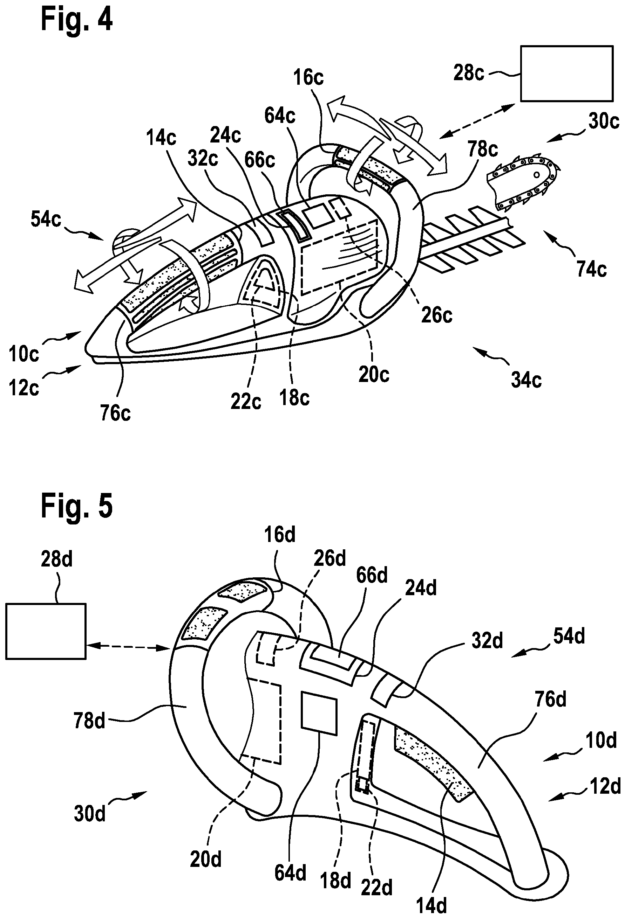

Figur 4 zeigt ein alternatives motorisch betreibbares Gartengerät 30c, insbesondere eine Heckenschere oder eine Kettensäge (Heckenscherenschneidbalken und Sägekette mit Führungsschiene zur Verdeutlichung der unterschiedlichen Ausgestaltungsmöglichkeiten des Gartengeräts 30c in Figur 4 schematisch dargestellt), mit zumindest einer Gartengerätebedienvorrichtung 10c. Das Gartengerät 30c umfasst zumindest eine Motorgehäuseeinheit 34c zu einer Aufnahme und zu einer Lagerung zumindest einer Antriebseinheit 20c des Gartengeräts 30c. Die Antriebseinheit 20c ist als Elektromotoreinheit ausgebildet. Es ist jedoch auch denkbar, dass die Antriebseinheit 20c eine andere, einem Fachmann als sinnvoll erscheinende Ausgestaltung aufweist, wie beispielsweise eine Ausgestaltung als Verbrennungsmotoreinheit, als Hybridmotoreinheit o. dgl. Das Gartengerät 30c kann als akkubetreibbares oder als kabelgebundenbetreibbares Gartengerät ausgebildet sein. Das Gartengerät 30c umfasst ferner zumindest eine Schneideinheit 74c. Die Schneideinheit 74c ist bei einer Ausgestaltung als Heckenschere als Heckenscherenschneidbalken oder bei einer Ausgestaltung des Gartengeräts 30c als Kettensäge als Sägeketteneinheit ausgebildet. Die Schneideinheit 74c ist auf eine, einem Fachmann bereits bekannte Art und Weise mittels der Antriebseinheit 20c antreibbar.

Die Gartengerätebedienvorrichtung 10c weist eine zumindest im Wesentlichen analoge Ausgestaltung zu der in den Figuren 1 und 2 dargestellten Gartengerätebedienvorrichtung 10a auf. Die Gartengerätebedienvorrichtung 10c umfasst zumindest eine Bedieneinheit 12c, die zumindest ein von einem Bediener betätigbares Bedienelement 14c und zumindest ein von einem Bediener betätigbares weiteres Bedienelement 16c aufweist, und zumindest eine Elektronikeinheit 18c, die zumindest dazu vorgesehen ist, zumindest in Abhängigkeit von einer Betätigung des Bedienelements 14c und des weiteren Bedienelements 16c zumindest eine Energieversorgung einer Antriebseinheit 20c zu schalten, wobei das Bedienelement 14c und/oder das weitere Bedienelement 16c als elektronische/s Bedienelement/e ausgebildet sind/ist.

Das Bedienelement 14c ist als resistives, als kapazitives oder als induktives Bedienelement ausgebildet. Das Bedienelement 14c ist berührungsempfindlich ausgebildet. Das Bedienelement 14c ist an einem Haupthandgriff 76c einer Handgriffeinheit 54c der Gartengerätebedienvorrichtung 10c angeordnet. Der Haupthandgriff 76c ist an einer der Schneideinheit 74c abgewandten Seite der Motorgehäuseeinheit 34c an der Motorgehäuseeinheit 34c angeordnet. Vorzugsweise ist das Bedienelement 14c als resistive, als kapazitive oder als induktive Bedienfläche ausgebildet, die mehrere Bedienbereiche aufweist, insbesondere zumindest zwei voneinander beabstandete Bedienbereiche. Eine Ausgestaltung des Bedienelements 14c als berührungsempfindliches Display ist ebenfalls denkbar. Bei einer Ausgestaltung des Bedienelements 14c als resistive, als kapazitive oder als induktive Bedienfläche ist es zudem denkbar, dass auf der Bedienfläche Bediensymbole angeordnet oder dargestellt sind, wie beispielsweise ein Pfeilsymbol, ein Stoppsymbol o. dgl. Das Bedienelement 14c erstreckt sich vorzugsweise, betrachtet entlang einer Umfangsrichtung des Haupthandgriffs 76c, zum Großteil, insbesondere vollständig, um den Haupthandgriff 76c. Es ist denkbar, dass einzelne Bedienbereiche des Bedienelements 14c, betrachtet entlang der Umfangsrichtung des Haupthandgriffs 76c, gleichmäßig verteilt um den Haupthandgriff 76c angeordnet sind. Die Umfangsrichtung des Haupthandgriffs 76c verläuft in einer Ebene, die sich zumindest im Wesentlichen senkrecht zu einer Längsachse des Haupthandgriffs 76c erstreckt.

Das weitere Bedienelement 16c ist als resistives, als kapazitives oder als induktives Bedienelement ausgebildet. Das weitere Bedienelement 16c ist berührungsempfindlich ausgebildet. Das weitere Bedienelement 16c ist an einem Zusatzhandgriff 78c der Handgriffeinheit 54c angeordnet. Der Zusatzhandgriff 78c ist an einer der Schneideinheit 74c zugewandten Seite der Motorgehäuseeinheit 34c an der Motorgehäuseeinheit 34c angeordnet. Vorzugsweise ist das weitere Bedienelement 16c als resistive, als kapazitive oder als induktive Bedienfläche ausgebildet, die mehrere Bedienbereiche aufweist, insbesondere zumindest zwei voneinander beabstandete Bedienbereiche. Eine Ausgestaltung des weiteren Bedienelements 16c als berührungsempfindliches Display ist ebenfalls denkbar. Bei einer Ausgestaltung des weiteren Bedienelements 16c als resistive, als kapazitive oder als induktive Bedienfläche ist es zudem denkbar, dass auf der Bedienfläche Bediensymbole angeordnet oder dargestellt sind, wie beispielsweise ein Pfeilsymbol, ein Stoppsymbol o. dgl. Das weitere Bedienelement 16c erstreckt sich vorzugsweise, betrachtet entlang einer Umfangsrichtung des Zusatzhandgriffs 78c, zum Großteil, insbesondere vollständig, um den Zusatzhandgriff 78c. Es ist denkbar, dass einzelne Bedienbereiche des weiteren Bedienelements 16c, betrachtet entlang der Umfangsrichtung des Zusatzhandgriffs 78c, gleichmäßig verteilt um den Zusatzhandgriff 78c angeordnet sind. Die Umfangsrichtung des Zusatzhandgriffs 78c verläuft in einer Ebene, die sich zumindest im Wesentlichen senkrecht zu einer Längsachse des Zusatzhandgriffs 78c erstreckt.

Die Elektronikeinheit 18c ist dazu vorgesehen, zumindest in Abhängigkeit von einer erfassten Bedienerbewegung auf dem Bedienelement 14c und/oder auf dem weiteren Bedienelement 16c zumindest eine Gartengerätefunktion, insbesondere eine von einer Aktivierung oder Deaktivierung der Energieversorgung der Antriebseinheit 20c verschiedene Gartengerätefunktion, zu schalten. Die Elektronikeinheit 18c ist beispielsweise dazu vorgesehen, zumindest in Abhängigkeit von einer Drehbewegung einer Hand eines Bedieners um die Längsachse des Haupthandgriffs 76c und/oder um die Längsachse des Zusatzhandgriffs 78c, einer Wischbewegung, einer Längsbewegung einer Hand eines Bedieners um die Längsachse des Haupthandgriffs 76c und/oder um die Längsachse des Zusatzhandgriffs 78c oder einer anderen, einem Fachmann als sinnvoll erscheinenden Bewegung auf dem Bedienelement 14c und/oder auf dem weiteren Bedienelement 16c zumindest eine Gartengerätefunktion, insbesondere eine von einer Aktivierung oder Deaktivierung der Energieversorgung der Antriebseinheit 20c verschiedene Gartengerätefunktion, zu schalten. Hinsichtlich weiterer Merkmale und Funktionen der in der Figur 4 dargestellten Gartengerätebedienvorrichtung 10c darf auf die Beschreibung der in den Figuren 1 und 2 dargestellten Gartengerätebedienvorrichtung 10a und auf die Beschreibung der in der Figur 3 dargestellten Gartengerätebedienvorrichtung 10b, insbesondere hinsichtlich einer Funktion der Elektronikeinheit 18c und eines Verfahrens zur Bedienung des Gartengeräts 30c verwiesen werden.

Figur 5 zeigt ein weiteres alternatives motorisch betreibbares Gartengerät 30d, insbesondere eine Heckenschere oder eine Kettensäge, mit zumindest einer Gartengerätebedienvorrichtung 10d. Das in Figur 5 dargestellte Gartengerät 30d weist eine zumindest im Wesentlichen analoge Ausgestaltung zu dem in der Figur 4 dargestellten Gartengerät 30c auf, so dass hinsichtlich einer Ausgestaltung des in Figur 5 dargestellten Gartengeräts 30d auf die Beschreibung des in Figur 4 dargestellten Gartengeräts 30c verwiesen werden darf. Die in Figur 5 dargestellte Gartengerätebedienvorrichtung 10d weist eine zumindest im Wesentlichen analoge Ausgestaltung zu der in der Figur 4 dargestellten Gartengerätebedienvorrichtung 10c auf. Im Unterschied zu der der in der Figur 4 dargestellten Gartengerätebedienvorrichtung 10c weist die in der Figur 5 dargestellte Gartengerätebedienvorrichtung 10d zumindest eine Bedieneinheit 12d auf, die zumindest ein von einem Bediener betätigbares Bedienelement 14d und zumindest ein von einem Bediener betätigbares weiteres Bedienelement 16d aufweist. Das Bedienelement 14d ist als mechanisches Bedienelement ausgebildet. Das Bedienelement 14d ist beweglich an einem Haupthandgriff 76d einer Handgriffeinheit 54d der Gartengerätebedienvorrichtung 10d gelagert. Infolge einer Bewegung des Bedienelements 14d ist ein Schaltelement (hier nicht näher dargestellt), insbesondere ein Mikroschalter, der Gartengerätebedienvorrichtung 10d betätigbar. Das Schaltelement ist leitungstechnisch mit einer Elektronikeinheit 18d der Gartengerätebedienvorrichtung 10d verbunden. Eine Betätigung des Schaltelements ist mittels der Elektronikeinheit 18d auswertbar, überwachbar und/oder weiterverarbeitbar. Insbesondere hinsichtlich möglicher und mittels der Elektronikeinheit 18d schaltbarer Funktionen darf auf die bereits zuvor beschriebenen Ausführungsbeispiele verwiesen werden. Hinsichtlich weiterer Merkmale und Funktionen der in der Figur 5 dargestellten Gartengerätebedienvorrichtung 10d darf auf die Beschreibung der in den Figuren 1 und 2 dargestellten Gartengerätebedienvorrichtung 10a verwiesen werden.

## Patentansprüche

1. Gartengerätebedienvorrichtung umfassend eine Handgriffeinheit (54a, 54b, 54c, 54d) an der zumindest eine Bedieneinheit (12a; 12b; 12c; 12d) angeordnet ist, wobei die Bedieneinheit (12a; 12b; 12c; 12d) an einem Handgriffelement (56a, 56b) der Handgriffeinheit (54a, 54b, 54c, 54d) oder an einem Haupt- und Zusatzhandgriff (76 c, 78c) der Handgriffeinheit (54a, 54b, 54c, 54d) zumindest ein von einem Bediener betätigbares Bedienelement (14a; 14b; 14c; 14d) und zumindest ein von einem Bediener betätigbares weiteres Bedienelement (16a; 16b; 16c; 16d) aufweist, und mit zumindest einer Elektronikeinheit (18a; 18b; 18c; 18d), die zumindest dazu vorgesehen ist, zumindest in Abhängigkeit von einer Betätigung des Bedienelements (14a; 14b; 14c; 14d) und des weiteren Bedienelements (16a; 16b; 16c; 16d) zumindest eine Energieversorgung einer Antriebseinheit (20a; 20c; 20d) zu schalten, wobei das Bedienelement (14a; 14b; 14c; 14d) und/oder das weitere Bedienelement (16a; 16b; 16c; 16d) als elektronische/s Bedienelement/e ausgebildet sind/ist, wobei die Elektronikeinheit (18a; 18b; 18c; 18d) zumindest dazu vorgesehen ist, zumindest in Abhängigkeit von einer als zeitlich definierten und/oder hinsichtlich einer Reihenfolge definierten Betätigungsabfolge des Bedienelements (14a; 14b; 14c; 14d) und/oder des weiteren Bedienelements (16a; 16b; 16c; 16d) ausgebildeten Betätigungskenngröße zumindest die Energieversorgung der Antriebseinheit (20a; 20c; 20d) zu schalten, **dadurch gekennzeichnet, dass** das Bedienelement (14a; 14b; 14c; 14d) und/oder das weitere Bedienelement (16a; 16b; 16c; 16d) als resistive/s, als kapazitive/s oder als induktive/s Bedienelement/e ausgebildet sind/ist und die Elektronikeinheit (18a; 18b; 18c; 18d) dazu vorgesehen ist, zumindest in Abhängigkeit von einer erfassten Bedienerbewegung auf dem Bedienelement (14a; 14b; 14c; 14d) und/oder auf dem weiteren Bedienelement (16a; 16b; 16c; 16d) zumindest eine Gartengerätefunktion, insbesondere eine von einer Aktivierung oder Deaktivierung der Energieversorgung der Antriebseinheit (20a; 20c; 20d) verschiedene Gartengerätefunktion, zu schalten, wobei die mittels der Elektronikeinheit (18a; 18b; 18c; 18d) erfasste Bedienerbewegung als Verdrehung der Hand, als Wischbewegung, als Tippbewegung, als Relativbewegung von zumindest zwei Fingern auf dem Bedienelement (14a; 14b; 14c; 14d) und/oder auf dem weiteren Bedienelement(16a; 16b; 16c; 16d) oder als Zeichnung eines Symbols mittels zumindest eines Fingers, ausgebildet ist.

2. Gartengerätehandgriffvorrichtung nach Anspruch 1, **dadurch gekennzeichnet, dass** die Elektronikeinheit (18a; 18b; 18c; 18d) zumindest eine Auswerteeinheit(22a; 22b; 22c; 22d) aufweist, die dazu vorgesehen ist, eine Bedienerbewegung auf dem Bedienelement (14a; 14b; 14c; 14d) und/oder auf dem weiteren Bedienelement (16a; 16b; 16c; 16d) auszuwerten.

3. Gartengerätebedienvorrichtung nach einem der vorhergehenden Ansprüche, **dadurch gekennzeichnet, dass** die Elektronikeinheit (18a; 18b; 18c; 18d) zumindest dazu vorgesehen ist, zumindest in Abhängigkeit von einem auf dem Bedienelement (14a; 14b; 14c; 14d) und/oder auf dem weiteren Bedienelement (16a; 16b; 16c; 16d) getätigten Gestensymbol zumindest eine Gartengerätefunktion, insbesondere eine von einer Aktivierung oder Deaktivierung der Energieversorgung der Antriebseinheit (20a; 20c; 20d) verschiedene Gartengerätefunktion, zu schalten.

4. Gartengerätebedienvorrichtung nach einem der vorhergehenden Ansprüche, **dadurch gekennzeichnet, dass** die Elektronikeinheit (18a; 18b; 18c; 18d) zumindest eine Auswerteeinheit (22a; 22b; 22c; 22d) aufweist, die zumindest dazu vorgesehen ist, zumindest eine Flächenkenngröße des Bedienelements (14a; 14b; 14c; 14d) und/oder des weiteren Bedienelements (16a; 16b; 16c; 16d) auszuwerten.

5. Gartengerätebedienvorrichtung nach einem der vorhergehenden Ansprüche, **gekennzeichnet durch** zumindest eine Kommunikationseinheit (26a; 26b; 26c; 26d), die zu einer Kommunikation mit einer externen Einheit (28a; 28b; 28c; 28d) vorgesehen ist.

6. Gartengerätebedienvorrichtung nach einem der vorhergehenden Ansprüche, **dadurch gekennzeichnet, dass** die Elektronikeinheit (18a; 18b; 18c; 18d) zumindest eine Arretierschaltfunktion und zumindest eine Totmannschaltfunktion aufweist, die zumindest in Abhängigkeit von einer Betätigung des Bedienelements (14a; 14b; 14c; 14d) und/oder des weiteren Bedienelements (16a; 16b; 16c; 16d) auswählbar sind.

7. Gartengerätebedienvorrichtung nach einem der vorhergehenden Ansprüche, **dadurch gekennzeichnet, dass** das Bedienelement (14b; 14c) und/oder das weitere Bedienelement (16a; 16b; 16c; 16d) berührungsempfindlich ausgebildet sind/ist.

8. Motorisch betreibbares Gartengerät mit zumindest einer Gartengerätebedienvorrichtung nach einem der vorhergehenden Ansprüche.

9. Verfahren zu einer Bedienung eines motorisch betreibbaren Gartengeräts nach Anspruch 8, **dadurch gekennzeichnet, dass** in zumindest einem Verfahrensschritt zumindest eine Bedienerbewegung auf dem Bedienelement (14a; 14b; 14c; 14d) und/oder dem weiteren Bedienelement (16a; 16b; 16c; 16d) zumindest zu einer Schaltung von zumindest einer Gartengerätefunktion, insbesondere eine von einer Aktivierung oder Deaktivierung der Energieversorgung der Antriebseinheit (20a; 20c; 20d) verschiedene Gartengerätefunktion, erfasst wird.

10. Verfahren nach Anspruch 9, **dadurch gekennzeichnet, dass** in zumindest einem Verfahrensschritt zumindest eine Reaktion der Elektronikeinheit (18a; 18b; 18c; 18d) auf eine Betätigung des Bedienelements (14a; 14b; 14c; 14d) in Abhängigkeit von einer berührungsempfindlichen Kenngröße des weiteren Bedienelements (16a; 16b; 16c; 16d) erfolgt.

11. Verfahren nach Anspruch 9 oder 10, **dadurch gekennzeichnet, dass** in zumindest einem Verfahrensschritt mittels der Elektronikeinheit (18a; 18b; 18c; 18d) zumindest eine Gartengerätefunktion, insbesondere eine von einer Aktivierung oder Deaktivierung einer Energieversorgung der Antriebseinheit (20a; 20c; 20d) verschiedene Gartengerätefunktion,
in Abhängigkeit von einer Betätigung eines zusätzlichen Bedienelements (32a; 32b; 32c; 32d), das als elektronisches Bedienelement und bewegungsempfindlich ausgebildet ist, schaltbar ist.

## Claims

1. Garden implement operator control apparatus comprising a handle unit (54a, 54b, 54c, 54d) on which at least one operator control unit (12a; 12b; 12c; 12d) is arranged, wherein the operator control unit (12a; 12b; 12c; 12d) has, on a handle element (56a, 56b) of the handle unit (54a, 54b, 54c, 54d) or on a main and auxiliary handle (76c, 78c) of the handle unit (54a, 54b, 54c, 54d), at least one operator control element (14a; 14b; 14c; 14d) which can be operated by an operator and at least one further operator control element (16a; 16b; 16c; 16d) which can be operated by an operator, and having at least one electronics unit (18a; 18b; 18c; 18d) which is provided to switch at least one power supply of a drive unit (20a; 20c; 20d) at least as a function of operation of the operator control element (14a; 14b; 14c; 14d) and of the further operator control element (16a; 16b; 16c; 16d), wherein the operator control element (14a; 14b; 14c; 14d) and/or the further operator control element (16a; 16b; 16c; 16d) are/is designed as (an) electronic operator control element(s), wherein the electronics unit (18a; 18b; 18c; 18d) is provided at least to switch at least the power supply of the drive unit (20a; 20c; 20d) at least as a function of an operating characteristic variable which is formed as an operating sequence of the operator control element (14a; 14b; 14c; 14d) and/or of the further operator control element (16a; 16b; 16c; 16d) defined with respect to time and/or defined in terms of an order, **characterized in that** the operator control element (14a; 14b; 14c; 14d) and/or the further operator control element (16a; 16b; 16c; 16d) are/is designed as (a) resistive, capacitive and/or inductive operator control element(s) and the electronics unit (18a; 18b; 18c; 18d) is provided for switching at least one garden implement function, in particular a garden implement function that is different from activation or deactivation of the power supply of the drive unit (20a; 20c; 20d), at least as a function of a sensed operator movement on the operator control element (14a; 14b; 14c; 14d) and/or on the further operator control element (16a; 16b; 16c; 16d), wherein the operator movement sensed by means of the electronics unit (18a; 18b; 18c; 18d) is designed as turning of the hand, as a swiping movement, as a tapping movement, as a relative movement of at least two fingers on the operator control element (14a; 14b; 14c; 14d) and/or on the further operator control element (16a; 16b; 16c; 16d) or drawing of a symbol using at least one finger.

2. Garden implement handle apparatus according to Claim 1, **characterized in that** the electronics unit (18a; 18b; 18c; 18d) has at least one evaluation unit (22a; 22b; 22c; 22d) which is provided to evaluate an operator movement on the operator control element (14a; 14b; 14c; 14d) and/or on the further operator control element (16a; 16b; 16c; 16d).

3. Garden implement operator control apparatus according to one of the preceding claims, **characterized in that** the electronics unit (18a; 18b; 18c; 18d) is provided at least to switch at least one garden implement function, in particular a garden implement function that is different from activation or deactivation of the power supply of the drive unit (20a; 20c; 20d), at least as a function of a gesture symbol made on the operator control element (14a; 14b; 14c; 14d) and/or on the further operator control element (16a; 16b; 16c; 16d).

4. Garden implement operator control apparatus according to one of the preceding claims, **characterized in that** the electronics unit (18a; 18b; 18c; 18d) has at least one evaluation unit (22a; 22b; 22c; 22d) which is provided at least to evaluate at least one area characteristic variable of the operator control element (14a; 14b; 14c; 14d) and/or of the further operator control element (16a; 16b; 16c; 16d).

5. Garden implement operator control apparatus according to one of the preceding claims, **characterized by** at least one communications unit (26a; 26b; 26c; 26d) which is provided to communicate with an external unit (28a; 28b; 28c; 28d).

6. Garden implement operator control apparatus according to one of the preceding claims, **characterized in that** the electronics unit (18a; 18b; 18c; 18d) has at least one locking switching function and at least one dead-man's switching function, which functions can be selected at least as a function of operation of the operator control element (14a; 14b; 14c; 14d) and/or of the further operator control element (16a; 16b; 16c; 16d).

7. Garden implement operator control apparatus according to one of the preceding claims, **characterized in that** the operator control element (14b; 14c) and/or the further operator control element (16a; 16b; 16c; 16d) are/is touch-sensitive.

8. Motor-operable garden implement having at least one garden implement operator control apparatus according to one of the preceding claims.

9. Method for operating a motor-operable garden implement according to Claim 8, **characterized in that** at least one operator movement on the operator control element (14; 14b; 14c; 14d) and/or the further operator control element (16a; 16b; 16c; 16d) at least for switching at least one garden implement function, in particular a garden implement function that is different from activation or deactivation of the power supply to the drive unit (20a; 20c; 20d), is sensed in at least one method step.

10. Method according to Claim 9, **characterized in that** at least one response of the electronics unit (18a; 18b; 18c; 18d) to operation of the operator control element (14a; 14b; 14c; 14d) takes place as a function of a touch-sensitive characteristic variable of the further operator control element (16a; 16b; 16c; 16d) in at least one method step.

11. Method according to Claim 9 or 10, **characterized in that** at least one garden implement function, in particular a garden implement function that is different from activation or deactivation of a power supply to the drive unit (20a; 20c; 20d), can be switched as a function of operation of an additional operator control element (32a; 32b; 32c; 32d), which is designed as an electronic operator control element and to be movement-sensitive, in at least one method step by means of the electronics unit (18a; 18b; 18c; 18d).

## Revendications

1. Dispositif de commande d'outil de jardinage, comprenant une unité de poignée (54a, 54b, 54c, 54d) sur laquelle est disposée au moins une unité de commande (12a ; 12b ; 12c ; 12d), l'unité de commande (12a ; 12b ; 12c ; 12d) présentant sur un élément de poignée (56a, 56b) de l'unité de poignée (54a, 54b, 54c, 54d) ou sur une poignée principale et supplémentaire (76c, 78c) de l'unité de poignée (54a, 54b, 54c, 54d) au moins un élément de commande (14a ; 14b ; 14c ; 14d) pouvant être commandé par un utilisateur et au moins un autre élément de commande (16a ; 16b ; 16c ; 16d) pouvant être commandé par un utilisateur, et comprenant au moins une unité électronique (18a ; 18b ; 18c ; 18d) qui est au moins prévue pour commuter au moins une alimentation en énergie d'une unité d'entraînement (20a ; 20c ; 20d) au moins en fonction d'un actionnement de l'élément de commande (14a ; 14b ; 14c ; 14d) et de l'autre élément de commande (16a; 16b ; 16c; 16d), l'élément de commande (14a ; 14b ; 14c ; 14d) et/ou l'autre élément de commande (16a; 16b ; 16c; 16d) étant réalisé(s) sous forme d'élément(s) de commande électronique(s), l'unité électronique (18a ; 18b ; 18c ; 18d) étant au moins prévue pour commuter au moins l'alimentation en énergie de l'unité d'entraînement (20a ; 20c ; 20d) au moins en fonction d'une grandeur caractéristique d'actionnement réalisée sous la forme d'une séquence d'actionnement de l'élément de commande (14a ; 14b ; 14c ; 14d) et/ou de l'autre élément de commande (16a ; 16b ; 16c ; 16d), définie dans le temps et/ou définie concernant un ordre,
**caractérisé en ce que** l'élément de commande (14a ; 14b ; 14c; 14d) et/ou l'autre élément de commande (16a; 16b ; 16c ; 16d) est/sont réalisé(s) sous forme d'élément(s) de commande résistif(s), capacitif(s) ou inductif(s), et l'unité électronique (18a ; 18b ; 18c ; 18d) est prévue pour commuter, au moins en fonction d'un geste d'utilisateur détecté sur l'élément de commande (14a ; 14b ; 14c ; 14d) et/ou sur l'autre élément de commande (16a ; 16b ; 16c ; 16d), au moins une fonction d'outil de jardinage, en particulier une fonction d'outil de jardinage différente d'une activation ou d'une désactivation de l'alimentation en énergie de l'unité d'entraînement (20a ; 20c ; 20d), le geste d'utilisateur détecté au moyen de l'unité électronique (18a ; 18b ; 18c ; 18d) est réalisé sous la forme d'une rotation de la main, d'un serrage de la main, d'un geste de balayage, d'un geste de tapotement, d'un geste relatif d'au moins deux doigts sur l'élément de commande (14a ; 14b ; 14c ; 14d) et/ou sur l'autre élément de commande (16a; 16b ; 16c ; 16d) ou d'un dessin d'un symbole au moyen d'au moins un doigt.

2. Dispositif de poignée d'outil de jardinage selon la revendication 1, **caractérisé en ce que** l'unité électronique (18a ; 18b ; 18c ; 18d) présente au moins une unité d'évaluation (22a ; 22b ; 22c ; 22d) qui est prévue pour évaluer un geste d'utilisateur sur l'élément de commande (14a ; 14b ; 14c ; 14d) et/ou sur l'autre élément de commande (16a ; 16b ; 16c ; 16d).

3. Dispositif de commande d'outil de jardinage selon l'une quelconque des revendications précédentes, **caractérisé en ce que** l'unité électronique (18a ; 18b ; 18c ; 18d) est au moins prévue pour commuter, au moins en fonction d'un symbole de geste actionné sur l'élément de commande (14a ; 14b ; 14c ; 14d) et/ou sur l'autre élément de commande (16a ; 16b ; 16c ; 16d), au moins une fonction d'outil de jardinage, en particulier une fonction d'outil de jardinage différente d'une activation ou d'une désactivation de l'alimentation en énergie de l'unité d'entraînement (20a ; 20c ; 20d).

4. Dispositif de commande d'outil de jardinage selon l'une quelconque des revendications précédentes, **caractérisé en ce que** l'unité électronique (18a ; 18b ; 18c ; 18d) présente au moins une unité d'évaluation (22a ; 22b ; 22c ; 22d) qui est au moins prévue pour évaluer au moins une grandeur caractéristique de surface de l'élément de commande (14a ; 14b ; 14c ; 14d) et/ou de l'autre élément de commande (16a ; 16b ; 16c ; 16d).

5. Dispositif de commande d'outil de jardinage selon l'une quelconque des revendications précédentes, **caractérisé par** au moins une unité de communication (26a ; 26b ; 26c ; 26d) qui est prévue pour une communication avec une unité externe (28a ; 28b ; 28c ; 28d).

6. Dispositif de commande d'outil de jardinage selon l'une quelconque des revendications précédentes, **caractérisé en ce que** l'unité électronique (18a ; 18b ; 18c ; 18d) présente au moins une fonction de commutation d'arrêt et au moins une fonction de commutation d'homme mort qui peuvent être sélectionnées au moins en fonction d'un actionnement de l'élément de commande (14a ; 14b ; 14c; 14d) et/ou de l'autre élément de commande (16a ; 16b ; 16c ; 16d).

7. Dispositif de commande d'outil de jardinage selon l'une quelconque des revendications précédentes, **caractérisé en ce que** l'élément de commande (14b ; 14c) et/ou l'autre élément de commande (16a; 16b ; 16c ; 16d) est/sont réalisé(s) de manière tactile.

8. Outil de jardinage à moteur comprenant au moins un dispositif de commande d'outil de jardinage selon l'une quelconque des revendications précédentes.

9. Procédé permettant de commander un appareil de jardinage à moteur selon la revendication 8, **caractérisé en ce que** dans au moins une étape de procédé, au moins un geste d'utilisateur sur l'élément de commande (14a ; 14b ; 14c ; 14d) et/ou sur l'autre élément de commande (16a ; 16b ; 16c ; 16d) est détecté au moins pour une commutation d'au moins une fonction d'outil de jardinage, en particulier une fonction d'outil de jardinage différente d'une activation ou d'une désactivation de l'alimentation en énergie de l'unité d'entraînement (20a ; 20c ; 20d).

10. Procédé selon la revendication 9, **caractérisé en ce que** dans au moins une étape de procédé, au moins une réaction de l'unité électronique (18a ; 18b ; 18c ; 18d) à un actionnement de l'élément de commande (14a ; 14b ; 14c ; 14d) a lieu en fonction d'une grandeur caractéristique tactile de l'autre élément de commande (16a ; 16b ; 16c ; 16d).

11. Procédé selon la revendication 9 ou 10, **caractérisé en ce que** dans au moins une étape de procédé, au moyen de l'unité électronique (18a ; 18b ; 18c ; 18d), au moins une fonction d'outil de jardinage, en particulier une fonction d'outil de jardinage différente d'une activation ou d'une désactivation d'une alimentation en énergie de l'unité d'entraînement (20a ; 20c ; 20d), peut être commutée en fonction d'un actionnement d'un élément de commande (32a ; 32b ; 32c ; 32d) supplémentaire qui est réalisé sous la forme d'un élément de commande électronique et de manière sensible à des gestes.
